# EUROPEAN PATENT SPECIFICATION

(11) **EP 2 664 094 B1**
(45) Date of publication and mention of the grant of the patent: **24.06.2015**
(21) Application number: 12700597.3
(22) Date of filing: 09.01.2012
(51) Int. Cl.: H04L 1/16, H04L 1/18, H04L 5/00

(54) **HANDLING OF ACKNOWLEDGEMENT MESSAGES IN A RELAY NETWORK NODE**
HANDHABUNG VON BESTÄTIGUNGSNACHRICHTEN IN EINEM RELAIS-NETZWERKKNOTEN
TRAITEMENT DE MESSAGES D'ACCUSÉ DE RÉCEPTION DANS UN N UD DE RÉSEAU RELAIS

(30) Priority: 10.01.2011 US 201161431236 P
(43) Date of publication of application: 20.11.2013
(73) Proprietor: Telefonaktiebolaget L M Ericsson (publ), 164 83 Stockholm (SE)
(72) Inventor: HOYMANN, Christian, 52064 Aachen (DE); ÖSTERGAARD, Jessica, S-118 64 Stockholm (SE); SUSITAIVAL, Riikka, FIN-00250 Helsinki (FI)
(74) Representative: Burchardi, Thomas
(86) International application number: PCT/EP2012/000059
(87) International publication number: WO 2012/095290

(56) References cited:
- WO-A2-2010/120159
- RAN WG2: "LS on HARQ feedback for RNs configured with R-PDCCH", 3GPP DRAFT; R2-106916, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 19 November 2010 (2010-11-19), XP050492602, [retrieved on 2010-11-19]
- ZTE: "HARQ feedback for Relay in MAC", 3GPP DRAFT; 36321_CRXXXX_(REL-10)_R2-106334 HARQ FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492151, [retrieved on 2010-11-09]
- ERICSSON ET AL: "Un HARQ timing alternatives", 3GPP DRAFT; R1-100864 UN HARQ TIMING ALTERNATIVES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418468, [retrieved on 2010-02-16]
- PANASONIC: "Necessity of R-PHICH for backhaul", 3GPP DRAFT; R1-102043, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419374, [retrieved on 2010-04-06]

## Description

### Technical Field

The present invention relates to methods for handling acknowledgement messages between a first protocol layer and a second protocol layer in a network node operating as a relay network node, wherein said first protocol layer is lower than the second protocol layer, said acknowledgement messages being related to Automatic Repeat Request, ARQ, processes, and to relay network nodes comprising a first protocol layer and a second protocol layer and capable of performing ARQ processes.

### Background

In mobile telecommunication systems, ARQ processes, particularly Hybrid Automatic Repeat Request, HARQ, processes, are employed as a method of error-control for data transmission that use acknowledgements (messages sent by the receiver indicating that it has correctly received a data frame or packet) and timeouts (specified periods of time allowed to elapse before an acknowledgment is to be received) to achieve reliable data transmission over an unreliable service like the radio link.

Such acknowledgements have to be delivered from a lower layer of a protocol stack, like a physical layer, PHY, towards one or more higher layers, like a Media Access Control, MAC, layer.

For regular terminals (User Equipments, UEs) a delivery mechanism of feedback in the form of ACK/NACK (Acknowledged/Not-Acknowledged) from layer 1 (or PHY layer) towards a higher layer (or MAC layer) already exists, as is disclosed e.g. in 3GPP TS 36.213 V. 10.0.0. There, the delivery of ACK/NACK is directly tied to the PUSCH-PHICH timing, i.e. bound towards the signalling provided by the Physical Uplink Shared Channel-Physical Hybrid-ARQ Indicator Channel. In LTE FDD (Long Term Evolution Frequency Division Duplex), for instance, PHICH (Physical Hybrid-ARQ Indicator Channel) associated to a PUSCH (Physical Uplink Shared Channel) occurs 4 TTIs (Transmission Time Intervals) after the PUSCH transmission. Hence, for every delivered ACK/NACK, the higher layer can determine the corresponding HARQ process using this fixed timing relation.

However, relay nodes configured with a relay-specific control channel (R-PDCCH) cannot expect HARQ feedback on the regular feedback channel (PHICH) for uplink transmissions as will become more evident in the following.

3GPP TS 36.216 V. 10.1.0 describes features and behavior of such relay nodes as follows: From a UE perspective a relay node is part of the radio access network and behaves like an eNB. A relay node is wirelessly connected to a donor eNB. A relay node includes at least two physical layer entities. A first physical layer entity is used for communication with UEs, another physical layer entity is used for communication with the donor eNB and it corresponds to UE functionality.

Although a relay node generally acts like a UE in the uplink direction, i.e. in communication with a so called donor eNB, PHICH is not defined for such connections and may therefore not be used.

As the signalling is not provided, the above timing relation used by a UE for delivery of acknowledgement messages from PHY to MAC can not be employed in a relay node.

It is however desirable to deliver acknowledgement messages towards a higher layer when an uplink data transmission (PUSCH), for which a grant was received on the R-PDCCH, was performed in order to avoid non-adaptive re-transmissions thereby reducing the load in the network.

The 3GPP document "LS on HARQ feedback for RNs configured with R-PDCCH", TSG RAN WG2 R2-106916, deals with the problem of lack of PHICH feedback for transmissions from the relay node towards the eNodeB. This document discloses internally sending an ACK towards the MAC layer of the Relay Node, after the uplink data for which an R-PDCCH grant was received has been sent.

### Summary

It is the object to obviate at least some of the above disadvantages and to provide an improved relay node and related method according to the accompanying claims.

Further advantageous embodiments are described in the following and are also detailed in dependent claims.

### Brief description of the drawings

Further characteristics and advantages of the invention will become better apparent from the detailed description of particular but not exclusive embodiments, illustrated by way of non-limiting examples in the accompanying drawings, wherein:
Figure 1 is a diagram showing a protocol stack in a network node;
Figure 2 is a signalling diagram illustrating an exchange of signals between a network access node and embodiments of a relay node;
Figure 3 is a diagram illustrating scheduling of messages in embodiments of a relay node;
Figure 4 is a schematic flow chart illustrating embodiments of method steps; and
Figure 5 is a block diagram illustrating embodiments of a relay node.

### Detailed description

With reference to the figures, embodiments of the invention are described in the following.

Generally, the invention provides methods for handling acknowledgement messages between a first protocol layer and a second protocol layer in a network node operating as a relay network node, said acknowledgement messages being related to Automatic Repeat Request, ARQ, processes, in which the second protocol layer is, when receiving an acknowledgement message from the first protocol layer, enabled to determine to which of a number of ARQ processes this acknowledgement message relates. Just as well, the invention provides relay network nodes comprising a first protocol layer and a second protocol layer and capable of performing ARQ processes which are adapted to enable the second protocol layer, when receiving an acknowledgement message from the first protocol layer, to determine to which of a number of ARQ processes this acknowledgement message relates.

According to an aspect of the invention there is provided a method for handling acknowledgement messages between a first protocol layer and a second protocol layer in a network node operating as a relay network node, said acknowledgement messages being related to Automatic Repeat Request, ARQ, processes, wherein a predetermined timing relation exists between delivery of an acknowledgement message from the first protocol layer to the second protocol layer and at least one other message being related to an ARQ process and/or between delivery of an acknowledgement message from the first protocol layer to the second protocol layer and at least one time slot or time interval provisioned or reserved or used for an ARQ process. The ARQ process to which the at least one other message relates respectively for which the at least one time slot or time interval is provisioned or reserved or used may be the same ARQ process as the one to which the acknowledgement message relates, or may be a different ARQ process.

Particularly, the predetermined timing relation may be such that one of a number of certain time slots or time intervals of a transmission scheme which are assigned to an ARQ process is used for delivery of said acknowledgement message.

In another aspect, the predetermined timing relation may be such that the acknowledgement message is delivered in a time slot or time interval which is used or reserved or provisioned for transmission of data, particularly uplink data, related to an ARQ process, particularly the same ARQ process to which the acknowledgement message is related. I.e., an acknowledgement message is sent from the first protocol layer to the second protocol layer at the same time or immediately after sending the corresponding uplink data by the network node.

In another aspect, the predetermined timing relation may be such that the acknowledgement message is delivered in a time slot or time interval which is used or reserved or provisioned for a downlink backhaul operation, e.g. reception of an uplink grant message for the ARQ process by the network node.

The time slot or time interval which is used or reserved or provisioned for a downlink backhaul operation may be the one in which an uplink grant message for data to be sent in the current ARQ process is received. I.e., an acknowledgement message is sent from the first protocol layer to the second protocol layer at the same time or immediately after receiving an uplink grant for corresponding uplink data to be sent by the network node, and in a time slot or time interval being related to the ARQ process to which the acknowledgement message is related.

In yet another aspect, the time slot or time interval which is used or reserved or provisioned for a downlink backhaul operation may be the next such time slot or time interval following the one in which an uplink grant message for data to be sent in the current ARQ process is received. This time slot or time interval may be related to another ARQ process than the one to which the acknowledgement message is related. It may also be related to the same ARQ process but following the one in which the uplink grant was received, i.e. a time slot or time interval in which an uplink grant may be expected for the ARQ process to which the acknowledgement message is related, regardless whether such an uplink grant is actually received or not.

According to a still further aspect, the predetermined timing relation may be such that the acknowledgement message is delivered within a time interval defined by an earliest starting point and a latest ending point. Therein, the earliest starting point is defined as an earliest time when it is known that data has to be acknowledged, e.g. at the time of sending the corresponding uplink data by the network node, while the latest ending point is defined as the latest time when the second protocol layer needs to be informed about successful or unsuccessful transmission of data, e.g. when it needs to decide whether to initiate a retransmission or transmission of new data.

According to another aspect, there is provided a method for handling acknowledgement messages between a first protocol layer and a second protocol layer in a network node operating as a relay network node, said acknowledgement messages being related to Automatic Repeat Request, ARQ, processes, wherein with an acknowledgement message information suitable for identifying the ARQ process to which the acknowledgement message is related is provided.

This information may comprise an ARQ process identifier, ID.

Still further, as an addition or as an alternative, the information may comprise an identification of a time slot or time interval which is related to the ARQ process, for example of the time slot or time interval in which an uplink grant for data relating to the ARQ process was received or in which uplink data relating to the ARQ process is transmitted.

Still further, as an addition or as an alternative" the information may comprise a time offset between the delivery of the acknowledgement message and a fixed timing instance of the transmission scheme, particularly the time slot or time interval in which uplink data corresponding to the ARQ process has been transmitted.

It is to be understood that the above described aspects may also be combined. I.e., a predetermined timing relation may exist between delivery of an acknowledgement message from the first protocol layer to the second protocol layer and at least one other message being related to an ARQ process and/or between delivery of an acknowledgement message from the first protocol layer to the second protocol layer and at least one time slot or time interval provisioned or reserved or used for an ARQ process, and at the same time information suitable for identifying the ARQ process to which the acknowledgement message is related may be provided. Therein, any of the above-mentioned timing relations may be combined with any of the above-mentioned information elements.

According to a further aspect there is provided a relay network node comprising a first protocol layer and a second protocol layer and capable of performing ARQ processes, wherein the first protocol layer comprises a timing module adapted to set a predetermined timing relation between delivery of an acknowledgement message from the first protocol layer to the second protocol layer and at least one other message being related to an ARQ process and/or between delivery of an acknowledgement message from the first protocol layer to the second protocol layer and at least one time slot or time interval provisioned or reserved or used for an ARQ process.

According to a still further aspect there is provided a relay network node comprising a first protocol layer and a second protocol layer and capable of performing ARQ processes, wherein the first protocol layer comprises an ARQ identification module adapted to provide, with an acknowledgement message, information suitable for identifying the ARQ process to which the acknowledgement message is related.

Again, the features of the above relay network nodes may be combined, i.e. a relay network node comprising a first protocol layer and a second protocol layer and capable of performing ARQ processes may comprise a timing module and an ARQ identification module as described above.

Further, any of the above relay network nodes may be adapted to perform any of the above-mentioned methods, i.e. a timing module as described above may be adapted to set any of the timing relations described above with respect to alternatives of the above method, and/or an ARQ identification module may be adapted to provide any of the information elements relations described above with respect to alternatives of the above method.

In all of the above described aspects, the first protocol layer may be a physical, layer (PHY), and the second protocol layer may be a Media Access Control layer (MAC).

Further, the Automatic Repeat Request, ARQ, process, may be a Hybrid Automatic Repeat Request, HARQ, process.

Said network node may in all above aspects be embodied by a relay network node, i.e. a network node relaying messages or transmissions between two other network nodes. It may particularly be a relay network node in a radio access network, e.g. of a mobile telecommunications system or any other radio based network, which may be used for relaying messages or transmissions between a subscriber node like a user terminal or the like and a network access node, e.g. an eNodeB, eNB. Said relay network node may be a network access node, e.g. an eNodeB, itself.

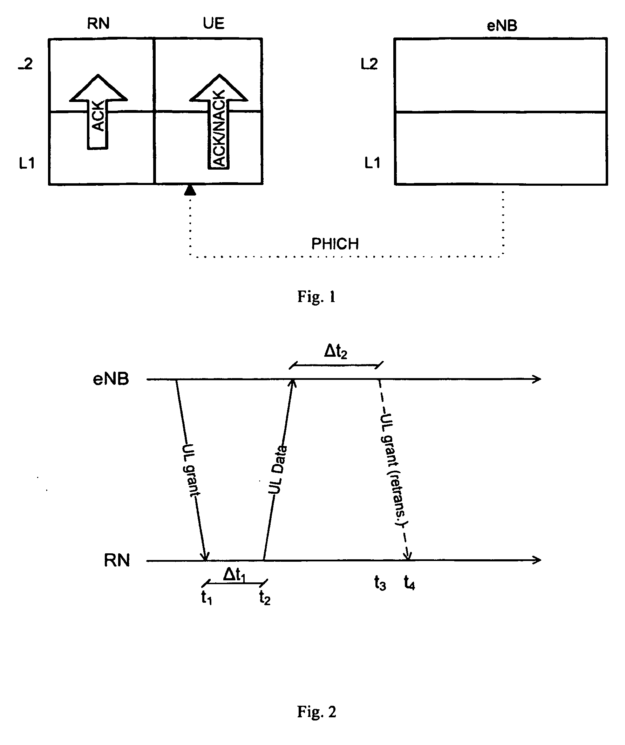

Figure 1 shows on the left hand side a protocol stack in a user equipment UE or relay network node RN and on the right hand side a protocol stack in a network access node eNB, e.g. an eNodeB. Although the behaviour of a relay node is typically assumed to be identical to the behaviour of a user equipment UE, there might be some minor differences depending on the actual implementation. The protocol stack comprises in both cases a first protocol layer L1, e.g. a physical layer, PHY, and above the first protocol layer another protocol layer, e.g. a second protocol layer L2, e.g. a Medium Access Control layer, MAC. Although described in a consecutive manner, it is clear that there might be one or more protocol layers in between the first and second protocol layer, e.g. in between the first and second protocol layer there may be another layer such as a LLC layer.

In the protocol stack of the user equipment UE or relay network node RN, acknowledgement messages ACK/NACK related to a (Hybrid) Automatic Repeat Request (H)ARQ protocol have to be delivered from a first protocol layer L1 to a second protocol layer L2 for each uplink transmission of data (i.e. for transmission of data from the user equipment UE or relay network node RN to the network access node eNB). In this respect, a relay network node RN acts substantially in the same way like a user equipment UE for uplink transmissions. There might be small differences as indicated in figure 1 in that the Relay network node RN typically provides only ACKs (positive acknowledgements) towards the higher layer(s). However, this is dependent on the actual implementation of the first protocol layer L1. E.g. in an exemplary case where a re-transmission is needed, a regular UL grant requesting "old" data is sent towards the RN/UE. Depending on the implementation, L1 may send a NACK message to L2 thereby triggering in fact a re-transmission. Therefore, even though within figure 1 the RN side is shown only to provide an ACK, it may also be that depending on the implementation also a NACK is provided as shown for the UE side.

In the case of a user equipment UE, the timing of the delivery of the acknowledgement message for a given HARQ process depends on respective messages received via a channel PHICH (Physical Hybrid ARQ Indicator Channel) from the network access node eNB.

However, in case of a relay network node RN communicating with a network access node eNB, no PHICH channel is defined between a radio access node eNB and the relay network node RN. L1 shall always assume a successful reception, i.e., ACK and will indicate this to L2. Thus, when receiving that acknowledgement message the second network layer L2 has no knowledge to which HARQ process said message pertains. This may get even more crucial, in case that several different HARQ processes are handled in parallel.

In order to enable the second protocol layer L2 of a relay network node RN to correctly assign an acknowledgement message ACK/NACK to a certain HARQ process, several solutions are proposed.

The following timing relations may be defined allowing for associating an ACK/NACK feedback with the corresponding (H)ARQ process.

A first option is to deliver an ACK for the UL (uplink) sub-frame, in which PUSCH was transmitted. This solution will result in a fast delivery of ACK. At the time of UL data transmission on PUSCH, the PHY layer (first protocol layer L1) of a relay network node delivers ACK to the higher layer even though such timing may deviate from the UL grant timing. Typically, UL grants are used to trigger re-transmissions or new initial transmissions. Another option (Second option) is to deliver ACK for the next DL (downlink) backhaul sub-frame (following the UL sub-frame with the PUSCH transmission), which can carry the UL grant for the next occurrence of the same (H)ARQ process as used for the PUSCH transmission. This solution matches the UL grant timing. Also the ACK is delivered at almost the same point in time as a potential UL grant.

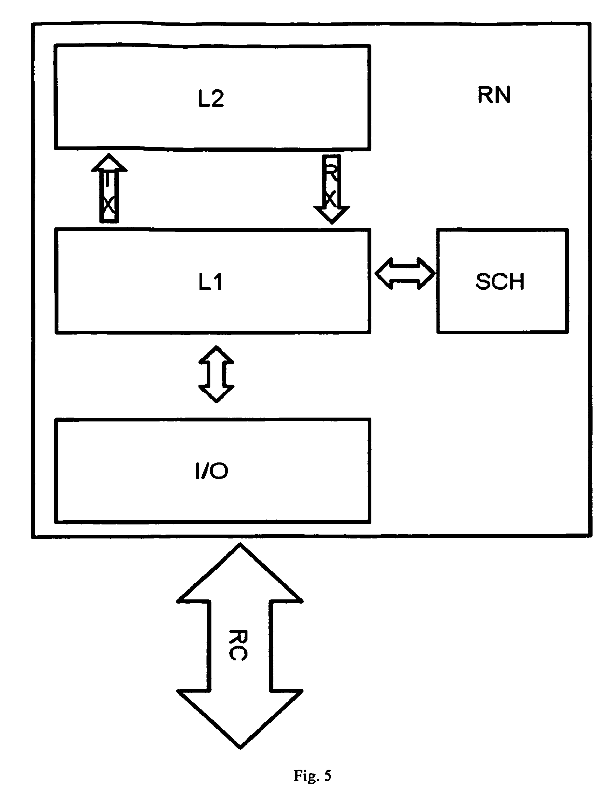

A scheduler SCH within the relay network node RN (Fig. 5) may therefore be adapted to determine whether UL data should be retransmitted (e.g. by delivery of UL grant with non-toggled new data indicator), whether it is granted to transmit new data (delivery of UL grant with toggled new data indicator) or whether to do nothing (delivery of ACK, no UL grant). This option allows for using of time slots for delivery of acknowledgement messages which are anyway used for communication between the first protocol layer L1 and the second protocol layer L2, thus offering the benefit that no additional time slot is necessary. Thereby, depending on the implementation of this communication, overhead may be reduced and/or the number of interrupts may be reduced, thus enhancing efficiency and/or allowing for real-time capabilities.

Both options will deliver an ACK from a lower protocol layer L1 (e.g. PHY, first protocol layer) towards a higher layer L2 (e.g. MAC, second protocol layer) for sub-frames which are configured for eNB-to-RN or RN-to-eNB transmissions (backhaul or Un sub-frames). For those backhaul sub-frames the protocol instances are already in the right state ("Un-state" instead of "Uu-state") and typically the protocol instances of PHY and MAC are already in to communication with each other. Hence the effort to change internal states and the number of interruptions is minimized.

Still another option (third option) is to deliver ACK at a pre-defined, configurable time within a predetermined time interval defined by e.g. an "earliest starting point", e.g., when the PUSCH transmission is made within the lower layer L1, or e.g. by a "latest ending point", e.g., when the higher layer L2 needs to decide whether to construct another message such as a MAC PDU for the next transmission opportunity of the (H)ARQ process. It is understood that also any time interval in between these time intervals may be chosen. E.g. ACK may be delivered n sub-frames after the PUSCH transmission, whereby said parameter n may be preconfigured or specified or negotiated. E.g. n may be set to 4 sub-frames, which would correspond to the timing of Rel-8/9 UE timing within LTE FDD.

This option provides freedom to choose the timing relation such that it is well adapted to implementation-specific processing time, while still providing a clear timing from which the corresponding (H)ARQ process can be identified.

Yet another option (fourth option) utilizing a backhaul sub-frame is to deliver ACK already in DL backhaul sub-frame which contains the UL grant for the PUSCH transmission. This option would result in the fastest delivery of ACK. However, it is noted that at the time of ACK delivery the PUSCH transmission has not been performed. This option allows for using of time slots for delivery of acknowledgement messages which are anyway used for communication between the first protocol layer L1 and the second protocol layer L2, thus offering the benefit that no additional time slot is necessary. Thereby, depending on the implementation of this communication, overhead may be reduced and/or the number of interrupts may be reduced, thus enhancing efficiency and/or allowing for real-time capabilities.

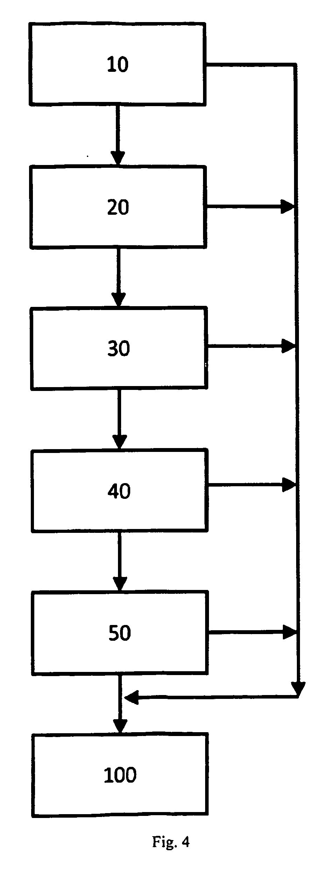

Still another option (fifth option) utilizing a backhaul sub-frame is: to deliver ACK in a next available DL backhaul sub-frame, although this DL backhaul sub-frame may carry an UL grant for a different HARQ process. This option would result in a fast delivery of ACK. However, again at the time of ACK delivery the PUSCH transmission has not yet been performed. As the ACK is sent in response to a next available DL backhaul sub-frame, it may not be easily possible to associate the HARQ process to the ACK, e.g. if two UL backhaul sub-frames are followed by a same DL backhaul sub-frame. This option allows for using a time slots for delivery of acknowledgement messages which is anyway used for communication between the first protocol layer L1 and the second protocol layer L2, thus offering the benefit that no additional time slot is necessary. Thereby, depending on the implementation of this communication, overhead may be reduced and/or the number of interrupts may be reduced, thus enhancing efficiency and/or allowing for real-time capabilities.
A signalling diagram illustrating an exchange of signals between an eNB and embodiments of a relay network node is shown in Figure 2. In Figure 4 a schematic flow chart illustrating embodiments of method steps is shown. With reference to these figures, embodiments of the invention will be further detailed in the following.

The relay network node RN is engaged with the network access node eNB in an uplink transmission. At a certain time t₁ (Fig. 2), the relay network node RN receives in a step 10 (Fig. 4) an uplink grant message UL grant indicating that data may be sent towards the network access node eNB. Already at this early time, the first protocol layer L1 (e.g. a physical layer, PHY) of the relay network node RN may deliver an acknowledgement message ACK/NACK, in this case a positive acknowledgement, to the second protocol layer L2 (e.g. a Medium Access Control, MAC, layer) in a step 100. I.e. a backhaul sub-frame is utilized to deliver ACK already in DL backhaul sub-frame which contains the UL grant for the PUSCH transmission. This option will therefore result in a fast delivery of ACK. Hence, the method may jump immediately towards step 100.

The acknowledgement message ACK/NACK (again a positive acknowledgement) may also be sent in a step 100 at a time t₂, when uplink data UL data is actually sent by the relay network node RN to the network access node eNB in a step 20. I.e. an ACK for the UL (uplink) sub-frame, in which PUSCH was transmitted, is delivered. This solution will result in a fast delivery of ACK. At the time of UL data transmission on PUSCH, the PHY layer (first protocol layer L1) of a relay network node delivers ACK to the higher layer even though such timing may deviate from the UL grant timing. Typically, UL grants are used to trigger re-transmissions or new initial transmissions. Note that between times t₁ and t₂ may be a predefined or predetermined time interval Δ t₁.

The acknowledgement message ACK/NACK (again a positive acknowledgement) may also be sent in a step 100 at a time t₃ when another uplink grant message can potentially be sent by network access node eNB in a step 30. Such uplink grant message may e.g. be an uplink grant for a retransmission when the original transmission was not successful. Note that at time t₃ an acknowledgement message may be delivered to second protocol layer L2 irrespective whether another uplink grant message has been sent/received or not I.e. an ACK is delivered in a next available DL backhaul sub-frame, although this DL backhaul sub-frame may carry an UL grant for a different HARQ process. This option would result in a fast delivery of ACK. However, again at the time of ACK delivery the actual PUSCH transmission has not yet been performed. As the ACK is sent in response to a next available DL backhaul sub-frame, it may not be easily possible to associate the HARQ process to the ACK, e.g. if two UL backhaul sub-frames are followed by a same DL backhaul sub-frame. This option allows for using a time slots for delivery of acknowledgement messages which are anyway used for communication between the first protocol layer L1 and the second protocol layer L2, offering the benefit that no additional time slot is necessary. Thereby, depending on the implementation of this communication, overhead may be reduced and/or the number of interrupts may be reduced, thus enhancing efficiency and/or allowing for real-time capabilities.

The acknowledgement message ACK/NACK (again a positive acknowledgement) may also be sent in a step 100 at a time t₄ in a step 40 when such uplink grant message can be received by relay network node RN. Such uplink grant message may e.g. be an uplink grant for a retransmission when the original transmission was not successful. Note that at time t₄ an acknowledgement message may be delivered to second protocol layer L2 irrespective whether another uplink grant message has been sent/received or not. I.e. an ACK for the next DL (downlink) backhaul sub-frame (following the UL sub-frame with the PUSCH transmission), which can carry the UL grant for the next occurrence of the same (H)ARQ process as used for the PUSCH transmission is delivered. This solution matches the UL grant timing. Also the ACK is delivered at almost the same point in time as a potential UL grant. A scheduler within the Relay network node may therefore be adapted to determine whether UL date should be retransmitted (e.g. by delivery of UL grant with non-toggled new data indicator), whether it is granted to transmit new data (delivery of UL grant with toggled new data indicator) or whether to do nothing (delivery of ACK, no UL grant). This option allows for using of time slots for delivery of acknowledgement messages which are anyway used for communication between the first protocol layer L1 and the second protocol layer L2, offering the benefit that no additional time slot is necessary. Thereby, depending on the implementation of this communication, overhead may be reduced and/or the number of interrupts may be reduced, thus enhancing efficiency and/or allowing for real-time capabilities.

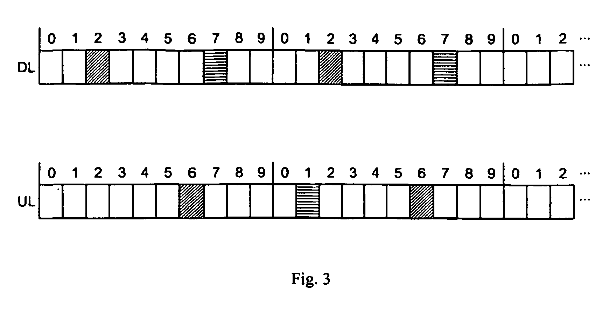

Figure 3 is a diagram illustrating scheduling of messages in embodiments of a relay node.

The shown timing exemplarily corresponds to the timing provisioned for LTE radio systems. In such systems, data packets are transmitted in sub-frames (numbered 0 .... 9) of radio frames of a fixed length, e.g. 10 ms (thus, each sub-frame or transmission time interval TTI offers a length of 1 ms). Sub-frames pertaining to a certain number inside respective radio frames are typically assigned to certain information or data elements to be transmitted. In the following it is assumed that for downlink DL, shown in the upper half of Figure 3 and signed with DL, sub-frame 2 (tilted hatching) of each radio frame is assigned for granting a backhaul transmission of a first uplink (H)ARQ process, while sub-frame 7 (transverse hatching) of each radio frame is assigned for granting a backhaul transmission of a second uplink (H)ARQ process. Therefore, acknowledgement messages from a first protocol layer L1 (e.g. a PHY layer) to a second protocol layer L2 (e.g. a MAC layer) may for example be delivered in a step 100 (Fig. 4) within sub-frame 2 (in which an uplink grant message for a current (H)ARQ process is received), or in sub-frame 7 (which may be dedicated to another (H)ARQ process) of the downlink schedule DL.

If DL sub-frame 2 of the first radio frame is used to trigger the sending of ACK, this corresponds to the above 4^{th} option (step 10). If DL sub-frame 2 of the second radio frame is used to trigger the sending of ACK, this corresponds to the above 2^{nd} option and DL sub-frame 7 of the first radio frame is used to trigger the sending of ACK, this corresponds to step 40.

In the following it is assumed that for uplink UL, shown in the lower half of Figure 3 and signed with UL, sub-frame 6 (tilted hatching) of each radio frame is reserved for uplink of a first (H)ARQ process, while sub-frame 1 (transverse hatching) of each radio frame is reserved for uplink of a second (H)ARQ process. Uplink means that in such sub-frames, uplink data may be sent from the relay network node RN towards the network access node eNB. For example, an acknowledgement message from a first protocol layer L1 (e.g. a PHY layer) to a second protocol layer L2 (e.g. a MAC layer) may for example be delivered in sub-frame 6 of the first radio frame, corresponding to above solution 1 (Step 20 in Fig. 4). Hence, the method may jump immediately towards step 100.

Additional information may be delivered towards a higher layer, e.g. a MAC layer, along the ACK feedback. For example, the additional information may comprise a (H)ARQ process ID, and/or A sub-frame number in which PUSCH was transmitted, and / or a time offset to the corresponding PUSCH transmission.

Additional signalling may be provided for allowing such additional information E.g. if the additional information comprises a (H)ARQ process ID, for which the ACK is valid, it may be envisaged for the lower protocol layer L1 (PHY, first protocol layer) and a higher protocol layer L2 (MAC, second protocol layer) to negotiate HARQ process IDs, e.g., numbers, letters, names, or combinations thereof and their application, e.g., in a descending or ascending order or having a predetermined calculation scheme. As an alternative, such (H)ARQ process IDs may also be predefined.

E.g. if the additional information comprises a sub-frame number, the higher protocol layer L2 (MAC, second protocol layer) may determine the corresponding (H)ARQ process. The sub-frame number is most probably known and it may be envisaged that the sub-frame number is the same in both the lower protocol layer L1 (PHY, (first protocol layer) and the higher protocol layer L2 (MAC, second protocol layer). Such an indication allows for the added benefit that no initial negotiation phase between the lower layer L1 (PHY, first protocol layer) and the higher protocol layer L2 (MAC, second protocol layer) is necessitated.

E.g. if the additional information comprises a time offset between delivery time and the corresponding PUSCH transmission the higher protocol layer L2 (MAC, second protocol layer) may determine the corresponding (H)ARQ process. It may be specified that the offset has a maximum length, thus determining also the number of the bits used for the indication. It should be understood that a timing relation can be defined in addition to the delivery of side information.

Further, the above embodiments are merely exemplary and several modifications will be apparent to and can be readily made by the skilled in the art without departing from the scope of the present invention.

The proposed solutions and embodiments enable higher layers (like second protocol layer L2, e.g. a MAC layer) to associate ACK feedback delivered from PHY layers (first protocol layer L1) with the corresponding (H)ARQ process. This allows proper operation of the (H)ARQ protocol.

A Relay Node RN according to the invention may be configured therefore for handling acknowledgement messages between a first protocol layer L1 and a second protocol layer L2 in a network node operating as a relay network node, wherein said first protocol layer L1 is lower than the second protocol layer L2, said acknowledgement messages ACK being related to Automatic Repeat Request (H)ARQ processes, the Relay Node RN being engaged in an Uplink transmission towards an network access node eNB. The Relay Node is receiving in a step 10 a first grant indication by said network access node eNB that an Uplink Transmission is granted at said first protocol layer entity. E.g. such information is the leftmost UL grant message indicated in Figure 2. After reception of this grant, the lower protocol layer may send in a step 100 towards the higher protocol layer an indication of Acknowledgement.

It may be foreseen that the Relay Node RN is performing the step 100 in response to the actual receipt of the first grant message (4^{th} option) or it may be envisaged that performing of step 100 is (also) bound to other issue(s).

Additionally, the Relay Node RN may send data after in an uplink direction towards the network access node eNB in a step 20.

It may also be envisaged that the Relay Node is performing the step 100 on or after sending of Data in an uplink direction towards the network access node eNB in a step 20 which is performed in response to said first received grant indication. Hence, the method may jump immediately towards step 100.

It may also be foreseen that the Relay Node RN is performing the step 100 in response to said first received grant information received 10 and another information in a sub-frame pertaining to a same HARQ process as shown with respect to figure 2 and 3. I.e. on receipt of another DL radio frame and a sub-frame assigned to the same HARQ process as described with respect to sub-frame 2 in the first and second radio frame in Figure 3, respectively the leftmost UL grant and the rightmost UL grant in respectively timing point t₄ Figure 2.

It may also be foreseen that the Relay Node RN is performing the step 100 in response to said first received grant information received and another information received in a step 30 in a sub-frame pertaining to a different HARQ process as shown with respect to figure 2 and 3. I.e. on receipt of DL radio frame and a sub-frame assigned to the different HARQ process as described with respect to sub-frame 7 in the first radio frame in Figure 3, respectively the leftmost UL grant and timing point t₃ in Figure 2. Hence, the method may jump immediately towards step 100.

It may also be foreseen that the Relay Node RN is performing the step in response to a second received grant information received in a step 40. Hence, the method may jump immediately towards step 100.

It may also be foreseen that the Relay Node RN is determining in a step 50 based on the received second grant information whether to resend said Data in an uplink direction towards the network access node, whether to transmit new data or whether to do nothing in response to said first and second received grant indication.

To allow for the second protocol layer to determine a respective (H)ARQ process associated to an ACK, the first protocol layer may provide additional information allowing the second protocol layer entity to determine the respective HARQ process. This information may be provided along the ACK information or may be provided by a separate signalling.

The additional information may be selected from the group comprising a predetermined HARQ process ID, a sub-frame number, a time offset between delivery time and a step of sending Data in an uplink direction towards the network access node in response to said first received grant indication via said first protocol layer entity.

As it is apparent, a relay node may not envisage all the above described method steps but may only embody some thereof. Also it may be foreseen that the behaviour may be selectively influenced by the operator of the relay node, e.g. by setting certain configuration parameters.

The invention is also embodied in a Relay Node which is adapted to perform some or even all of the above described method steps. Therefore, a Relay Node RN may comprise a first protocol layer entity and a second protocol layer entity. Said protocol layer entities are shown in Figure 5 as a first protocol layer L1 and a second protocol layer L2. The Relay Node RN is adapted to handle acknowledgement messages ACK between said first protocol layer L1 and said second protocol layer L2, e.g. via a transmission as indicated by arrow TX. Said first protocol L1 may also receive other data and / or instructions from said higher protocol layer L2 as indicated by arrow RX. The acknowledgement messages ACK are related to Automatic Repeat Request, such as an (H)ARQ, processes, and the Relay Node RN is typically engaged in an Uplink transmission, towards a network access node eNB. Said first protocol entity L1 is adapted to receive a first grant indication by said network access node that an Uplink Transmission is granted e.g. via a Radio Network RC, and said first protocol entity L1 is adapted to send thereafter an indication of Acknowledgement towards said second protocol layer entity L2. It is understood that the first and second protocol entity L1, L2 may be embodied in software, hardware or a combination thereof. In particular it may be embodied by a processor such as a microprocessor, a FPGA, an ASIC, a DSP or the like. It is also understood that the Relay Node RN comprises an I/O Unit I/O (Fig. 5) such as a transceiver or separate sending and receiving units allowing for communication via the Radio Network RC towards the network access node eNB. In addition the Relay Node RN may comprise a scheduler SCH. The scheduler SCH may be adapted to determine whether UL data should be retransmitted (e.g. by delivery of UL grant with non-toggled new data indicator), whether it is granted to transmit new data (delivery of UL grant with toggled new data indicator) or whether to do nothing (delivery of ACK, no UL grant).

It may be foreseen that the first protocol entity L1 is adapted to send an indication of Acknowledgement in response to said first received grant indication.

It may further be foreseen that the first protocol entity L1 is adapted to send Data in an uplink direction towards the network access node eNB in response to said first received grant indication.

It may further be foreseen that the first protocol entity L1 is adapted to send an indication of Acknowledgement in response to said sending of Data in an uplink direction.

It may further be foreseen that the first protocol entity L1 is adapted to send an indication of Acknowledgement in response to said first received grant information and further information received in a sub-frame pertaining to a same HARQ process.

It may further be foreseen that the first protocol entity L1 is adapted to send an indication of Acknowledgement in response to said first received grant information and further information received in a sub-frame pertaining to a different HARQ process.

It may further be foreseen that the first protocol entity L1 is adapted to send an indication of Acknowledgement in response to a second received grant information received.

It may further be foreseen that the second protocol entity L2 is adapted to determine based on the received second grant information whether to resend said Data in an uplink direction towards the network access node eNB, whether to transmit new data or whether to do nothing in response to said first and second received grant indication.

It may further be foreseen that the first protocol entity L1 is adapted to send information allowing the second protocol layer entity L2 to determine the respective HARQ process.

It may further be foreseen that the information is selected from the group comprising a predetermined HARQ process ID, a sub-frame number, a time offset between deliver time and a step of sending Data in an uplink direction towards the network access node in response to said first received grant indication via said first protocol layer entity L1.

It should be appreciated by those skilled in the art that any block diagrams, signalling diagrams and so on represent conceptual views of illustrative circuitry embodying the principles of the invention. Similarly, it will be appreciated that any flow charts, flow diagrams, and the like represent various processes which may be substantially represented on computer readable medium and so executed by a computer or processor, whether or not such computer or process is explicitly shown.

## Claims

1. A method for handling acknowledgement messages between a first protocol layer and a second protocol layer in a network node operating as a relay network node, wherein said first protocol layer is lower than the second protocol layer, said acknowledgement messages being related to Automatic Repeat Request processes, the Relay Node being engaged in an Uplink transmission towards an network access node, comprising the steps of:
• Receiving (10) a first grant indication from said network access node that an Uplink Transmission is granted at said first protocol layer entity, **characterised by**:
• Sending (100) from said first protocol layer entity, towards said second protocol layer entity an indication of Acknowledgement in response to said first received grant indication (10).

2. The method according to claim 1, further comprising the step of sending (20) Data in an uplink direction towards the network access node in response to said first received grant indication via said first protocol layer entity.

3. The method according to claim 2, wherein the sending (100) of an indication of Acknowledgement is performed in response to said sending (20) of Data in an uplink direction.

4. The method according to anyone of claims 1 to 3, wherein the step of sending (100) an indication of Acknowledgement is performed in response to said first received grant information (10) and another information in a sub-frame pertaining to a same HARQ process,
or in response to said first received grant information and another information received (30) in a sub-frame pertaining to a different HARQ process.

5. The method according to anyone of claims 1 to 3, wherein the step of sending (100) an indication of Acknowledgement is performed in response to a second received grant information (40).

6. The method according to claim 5, further comprising the step of determining (50) based on the second received grant information whether to resend said Data in an uplink direction towards the network access node, whether to transmit new data or whether to do nothing in response to said first and second received grant indication.

7. The method according to anyone of the preceding claims, further comprising the step of providing information allowing the second protocol layer entity to determine the respective HARQ process.

8. The method according to claim 7, wherein the information is selected from the group comprising a predetermined HARQ process ID, a sub-frame number, a time offset between delivery time and a step of sending Data in an uplink direction towards the network access node in response to said first received grant indication via said first protocol layer entity.

9. A Relay Node apparatus being adapted to comprise a first protocol layer entity and a second protocol layer entity, such entities being embodied in soft were, hardware or a combination thereof, wherein said first protocol layer is lower than the second protocol layer, said Relay Node being adapted to handle acknowledgement messages between said first protocol layer and said second protocol layer, said acknowledgement messages being related to Automatic Repeat Request, ARQ, processes, the Relay Node apparatus being adaped to engage in an Uplink transmission, towards an network access node, whereby
• Said first protocol layer entity is adapted to receive a first grant indication from said network access node that an Uplink Transmission is granted,
the Relay Node apparatus being **characterised in that**
• Said first protocol layer entity is adapted to send an indication of Acknowledgement towards said second protocol layer entity in response to said first received grant indication.

10. The Relay Node according to claim 9, wherein said first protocol entity is adapted to send Data in an uplink direction towards the network access node in response to said first received grant indication.

11. The Relay Node according to claim 10, wherein said first protocol entity is adapted to send an indication of Acknowledgement in response to said sending of Data in an uplink direction.

12. The Relay Node according to anyone of claims 9 to 11 wherein said first protocol entity is adapted to send an indication of Acknowledgement in response to said first received grant information and another information received in a sub-frame pertaining to a same HARQ process, or
to send an indication of Acknowledgement in response to said first received grant information and another information received in a sub-frame pertaining to a different HARQ process.

13. The Relay Node according to anyone of claims 9 to 11, wherein said first protocol entity is adapted to send an indication of Acknowledgement in response to a second received grant information.

14. The Relay Node according to claim 13, wherein said second protocol entity is adapted to determine based on the second received grant information whether to resend said Data in an uplink direction towards the network access node, whether to transmit new data or whether to do nothing in response to said first and second received grant indication.

15. The Relay Node according to anyone of the preceding claims 9 to 14, wherein said first protocol entity is adapted to send information allowing the second protocol layer entity to determine the respective HARQ process.

16. The Relay Node according to claim 15, wherein the information is selected from the group comprising a predetermined HARQ process ID, a sub-frame number, a time offset between deliver time and a step of sending Data in an uplink direction towards the network access node in response to said first received grant indication via said first protocol layer entity.

## Patentansprüche

1. Verfahren zur Handhabung von Bestätigungsnachrichten zwischen einer ersten Protokollschicht und einer zweiten Protokollschicht in einem Netzknoten, der als ein Relais-Netzknoten fungiert, wobei die erste Protokollschicht niedriger als die zweite Protokollschicht ist, die Bestätigungsnachrichten mit Prozessen automatischer Wiederholungsanforderung in Beziehung stehen, der Relaisknoten an einer Aufwärtsübertragung an einen Netzzugangsknoten beteiligt ist, umfassend die folgenden Schritte:
• Empfangen (10) einer ersten Bewilligungsanzeige vom Netzzugangsknoten, dass eine Aufwärtsübertragung an der Instanz der ersten Protollschicht bewilligt wird, **gekennzeichnet durch**:
• Senden (100) von der Instanz der ersten Protokollschicht einer Anzeige einer Bestätigung in Reaktion auf die erste empfangene Bewilligungsanzeige (10) an die Instanz der zweiten Protokollschicht.

2. Verfahren nach Anspruch 1, ferner umfassend den Schritt des Sendens (20) von Daten über die Instanz der ersten Protokollschicht in Aufwärtsrichtung an den Netzzugangsknoten in Reaktion auf die erste empfangene Bewilligungsanzeige.

3. Verfahren nach Anspruch 2, wobei das Senden (100) einer Anzeige der Bestätigung in Reaktion auf das Senden (20) von Daten in einer Aufwärtsrichtung erfolgt.

4. Verfahren nach einem der Ansprüche 1 bis 3, wobei der Schritt des Sendens (100) einer Anzeige der Bestätigung in Reaktion auf die erste empfangene Bewilligungsinformation (10) und eine andere Information in einem Unterrahmen in Bezug auf einen gleichen HARQ-Prozess
oder in Reaktion auf die erste empfangene Bewilligungsinformation und eine andere Information, die in einem Unterrahmen in Bezug auf einen anderen HARQ-Prozess empfangen wird (30), ausgeführt wird.

5. Verfahren nach einem der Ansprüche 1 bis 3, wobei der Schritt des Sendens (100) einer Anzeige der Bestätigung in Reaktion auf eine zweite empfangene Bewilligungsinformation ausgeführt wird (40).

6. Verfahren nach Anspruch 5, ferner umfassend den Schritt des Bestimmens (50) basierend auf der zweiten empfangenen Bewilligungsinformation, ob in Reaktion auf die erste und zweite empfangene Bewilligungsanzeige die Daten erneut in einer Aufwärtsrichtung an den Netzzugangsknoten gesendet werden sollen, ob neue Daten gesendet werden sollen, oder ob nichts getan werden soll.

7. Verfahren nach einem der vorhergehenden Ansprüche, ferner umfassend den Schritt des Bereitstellens von Informationen, die es der Instanz der zweiten Protokollschicht ermöglichen, den jeweiligen HARQ-Prozess zu bestimmen.

8. Verfahren nach Anspruch 7, wobei die Informationen aus der Gruppe ausgewählt sind, die eine vorbestimmte HARQ-Prozess-ID, eine Unterrahmennummer, einen Zeitoffset zwischen einer Zustellzeit und einem Schritt des Sendens von Daten in einer Aufwärtsrichtung an den Netzzugangsknoten in Reaktion auf die erste empfangene Bewilligungsanzeige über die Instanz der ersten Protokollschicht umfasst.

9. Relaisknoten-Vorrichtung, die so ausgelegt ist, dass sie eine Instanz einer ersten Protokollschicht und eine Instanz einer zweiten Protokollschicht umfasst, wobei diese Instanzen in Software, Hardware oder einer Kombination davon realisiert sind, wobei die erste Protokollschicht niedriger als die zweite Protokollschicht ist, der Relaisknoten so ausgelegt ist, dass er Bestätigungsnachrichten zwischen der ersten Protokollschicht und der zweiten Protokollschicht handhabt, die Bestätigungsnachrichten mit Prozessen automatischer Wiederholungsanforderung, ARQ, in Beziehung stehen, die Relaisknoten-Vorrichtung dazu ausgelegt ist, sich an einer Aufwärtsübertragung zu einem Netzzugangsknoten hin zu beteiligen, wobei
• die Instanz der ersten Protokollschicht dazu ausgelegt ist, eine erste Bewilligungsanzeige, dass eine Aufwärtsübertragung bewilligt ist, vom Netzzugangsknoten zu empfangen,
wobei die Relaisknoten-Vorrichtung **dadurch gekennzeichnet ist, dass**
• die Instanz der ersten Protokollschicht dazu ausgelegt ist, in Reaktion auf die erste empfangene Bewilligungsanzeige eine Anzeige einer Bestätigung an die Instanz der zweiten Protokollschicht zu senden.

10. Relaisknoten nach Anspruch 9, wobei die Instanz der ersten Protokollschicht dazu ausgelegt ist, in Reaktion auf die erste empfangene Bewilligungsanzeige Daten in einer Aufwärtsrichtung an den Netzzugangsknoten zu senden.

11. Relaisknoten nach Anspruch 10, wobei die Instanz der ersten Protokollschicht dazu ausgelegt ist, in Reaktion auf das Senden von Daten in einer Aufwärtsrichtung eine Anzeige der Bestätigung zu senden.

12. Relaisknoten nach einem der Ansprüche 9 bis 11, wobei die Instanz der ersten Protokollschicht dazu ausgelegt ist, eine Anzeige der Bestätigung in Reaktion auf die erste empfangene Bewilligungsinformation und eine andere Information zu senden, die in einem Unterrahmen in Bezug auf einen gleichen HARQ-Prozess empfangen wird,
oder eine Anzeige der Bestätigung in Reaktion auf die erste empfangene Bewilligungsinformation und eine andere Information zu senden, die in einem Unterrahmen in Bezug auf einen anderen HARQ-Prozess empfangen wird.

13. Relaisknoten nach einem der Ansprüche 9 bis 11, wobei die Instanz der ersten Protokollschicht dazu ausgelegt ist, eine Anzeige der Bestätigung in Reaktion auf eine zweite empfangene Bewilligungsinformation zu senden.

14. Relaisknoten nach Anspruch 13, wobei die Instanz der zweiten Protokollschicht dazu ausgelegt ist, basierend auf der zweiten Bewilligungsinformation zu bestimmen, ob in Reaktion auf die erste und zweite empfangene Bewilligungsanzeige die Daten erneut in einer Aufwärtsrichtung an den Netzzugangsknoten gesendet werden sollen, ob neue Daten gesendet werden sollen, oder ob nichts getan werden soll.

15. Relaisknoten nach einem der vorhergehenden Ansprüche 9 bis 14, wobei die Instanz der ersten Protokollschicht dazu ausgelegt ist, Informationen zu senden, die es der Instanz der zweiten Protokollschicht ermöglichen, den jeweiligen HARQ-Prozess zu bestimmen.

16. Relaisknoten nach Anspruch 15, wobei die Informationen aus der Gruppe ausgewählt sind, die eine vorbestimmte HARQ-Prozess-ID, eine Unterrahmennummer, einen Zeitoffset zwischen einer Zustellzeit und einem Schritt des Sendens von Daten in einer Aufwärtsrichtung an den Netzzugangsknoten in Reaktion auf die erste empfangene Bewilligungsanzeige über die Instanz der ersten Protokollschicht umfasst.

## Revendications

1. Procédé de gestion de messages d'accusé de réception entre une première couche de protocole et une seconde couche de protocole dans un noeud de réseau fonctionnant comme un noeud de réseau de relais, dans lequel ladite première couche de protocole est inférieure à la seconde couche de protocole, lesdits messages d'accusé de réception se rapportant à des processus de demande de répétition automatique, le noeud de réseau étant engagé dans une transmission en liaison montante vers un noeud d'accès de réseau, comprenant les étapes consistant à :
• recevoir (10) une première indication d'accord provenant du dit noeud d'accès de réseau qu'une transmission de liaison montante est accordée au niveau de ladite première entité de couche de protocole, **caractérisé en ce que**
• envoyer (100) de ladite première entité de couche de protocole à ladite seconde entité de couche de protocole une indication d'accusé de réception en réponse à ladite première indication d'accord reçue (10).

2. Procédé selon la revendication 1, comprenant en outre l'étape d'envoi (20) de données dans une direction de liaison montante vers un noeud d'accès de réseau en réponse à ladite première indication d'accord reçue via ladite première entité de couche de protocole.

3. Procédé selon la revendication 2, dans lequel l'envoi (100) une indication d'accusé de réception est effectuée en réponse au dit envoi (20) de données dans une direction de liaison montante.

4. Procédé selon une quelconque des revendications 1 à 3, dans lequel l'étape d'envoi (100) une indication d'accusé de réception est effectuée en réponse à ladite première information d'accord reçue (10) et une autre information dans une sous trame se rapportant à un même processus HARQ, ou en réponse à ladite première information reçue et une autre information reçue (30) dans une sous trame se rapportant à un processus HARQ différent.

5. Procédé selon une quelconque des revendications 1 à 3, dans lequel l'étape d'envoi (100) d'une indication d'accusé de réception est effectuée en réponse à une seconde information d'accord reçue (40).

6. Procédé selon la revendication 5, comprenant en outre l'étape de détermination (50) sur la base de la seconde information d'accord reçue de renvoyer lesdites données dans une direction de liaison montante vers le noeud d'accès de réseau, de transmettre de nouvelles données ou de ne rien faire en réponse à ladite première et seconde indication d'accord reçue.

7. Procédé selon une quelconque des revendications précédentes, comprenant en outre l'étape de fourniture d'information permettant à la seconde entité de couche de protocole de déterminer le processus HARQ respectif.

8. Procédé selon la revendication 7, dans lequel l'information est sélectionnée dans le groupe comprenant un ID de processus HARQ prédéterminé, un numéro de sous trame, un décalage temporel entre un temps de remise et une étape d'envoi de données dans une direction de liaison montante vers le noeud d'accès de réseau en réponse à ladite première indication d'accord reçue via ladite première entité de couche de protocole.

9. Dispositif de noeud de relais étant adaptée pour comprendre une première entité de couche de protocole et une seconde entité de couche de protocole, de telles entités étant contenues dans un logiciel, matériel ou une combinaison de ceux-ci, dans lequel ladite première couche de protocole est inférieure à la seconde couche de protocole, ledit noeud de relais étant adaptée pour gérer les messages d'accusé de réception entre ladite première couche de protocole et ladite seconde couche de protocole, lesdits messages d'accusé de réception étant relatifs aux processus de demande de répétition automatique, ARQ, le dispositif de noeud de relais étant adaptée pour s'engager dans une transmission de liaison montante vers un noeud d'accès de réseau, dans lequel :
• ladite première entité de couche de protocole est adaptée pour recevoir une première indication d'accord provenant du dit noeud d'accès de réseau qu'une transmission de liaison montante est accordée, le dispositif de noeud de relais étant **caractérisé en ce que**
• ladite première entité de couche de protocole est adaptée pour envoyer une indication d'accusé de réception vers ladite seconde entité de couche de protocole en réponse à la première indication d'accord reçue.

10. Noeud de relais selon la revendication 9, dans lequel ladite première entité de protocole est adaptée pour envoyer des données dans une direction de liaison montante vers le noeud d'accès de réseau en réponse à ladite première indication d'accord reçue.

11. Noeud de relais selon la revendication 10, dans lequel ladite première entité de protocole est adaptée pour envoyer une indication d'accusé de réception en réponse au dit envoi de données dans une direction de liaison montante.

12. Noeud de relais selon une quelconque des revendications 9 à 11, dans lequel la première entité de protocole est adaptée pour envoyer une indication d'accusé de réception en réponse à ladite première information d'accord reçue et une autre information reçue dans une sous trame se rapportant à un même processus HARQ, ou envoyer une indication d'accusé de réception en réponse à ladite première information reçue et une autre information reçue dans une sous trame se rapportant à un processus HARQ différent.

13. Noeud de relais selon une quelconque des revendications 9 à 11, dans lequel ladite première entité de protocole est adaptée pour envoyer une indication d'accusé de réception en réponse à une seconde information d'accord reçue.

14. Noeud de relais selon la revendication 13, dans lequel ladite seconde entité de protocole est adaptée pour déterminer sur la base de la seconde information d'accord reçue de renvoyer lesdites données dans une direction de liaison montante vers le noeud d'accès de réseau, de transmettre de nouvelles données ou de ne rien faire en réponse à ladite première et seconde indication d'accord reçue.

15. Noeud de relais selon une quelconque des revendications précédentes 9 à 14, dans lequel ladite première entité de protocole est adaptée pour envoyer une information permettant à la seconde entité de couche de protocole de déterminer le processus HARQ respectif.

16. Noeud de relais selon la revendication 15, dans lequel l'information sélectionnée dans le groupe comprenant un ID de processus HARQ prédéterminé, un numéro de sous trame, un décalage temporel entre un temps de remise et une étape d'envoi de données dans une direction de liaison montante vers le noeud d'accès de réseau en réponse à ladite première indication d'accord reçue via ladite première entité de couche de protocole.
